# EUROPEAN PATENT SPECIFICATION

(11) **EP 3 123 107 B1**
(45) Date of publication and mention of the grant of the patent: **06.06.2018**
(21) Application number: 15712616.0
(22) Date of filing: 26.03.2015
(51) Int. Cl.: G01B 7/00

(54) **APPARATUS FOR CHECKING DIMENSIONS AND SHAPE OF A MECHANICAL PIECE**
VORRICHTUNG ZUR PRÜFUNG DER ABMESSUNGEN UND DER FORM EINES MECHANISCHEN TEILS
APPAREIL POUR VÉRIFIER LES DIMENSIONS ET LA FORME D'UNE PIÈCE MÉCANIQUE

(30) Priority: 26.03.2014 IT BO20140161
(43) Date of publication of application: 01.02.2017
(73) Proprietor: Marposs Societa' Per Azioni, 40010 Bentivoglio (BO) (IT)
(72) Inventor: GOLINELLI, Guido, I-40121 Bologna (IT)
(86) International application number: PCT/EP2015/056546
(87) International publication number: WO 2015/144818

(56) References cited:
- EP-A1- 0 292 767
- US-A- 4 291 466
- US-A- 4 555 855

## Description

### Technical field

The present invention relates to an apparatus for checking dimensions and shape of a mechanical piece.

An apparatus according to the present invention can be used manually by an operator, or automatically in automatic measuring assemblies.

### Background art

There are well-known devices or gauges for measuring or checking a dimension between a couple of surfaces of a mechanical piece which comprise feelers connected to a system of arms adapted to transmit to a transducer device the displacements of the feelers following the contact with the piece.

A gauge belonging to this kind of devices is described in the patent application published under the No. US 2010/0229414 which relates in particular to a plug gauge for checking internal diameters. The gauge comprises a handle housing the electronics necessary to transmit the electrical signals and a probe including a centering nosepiece and a measuring armset with a couple of feelers which is connected to a transducer device for the generation of signals. A mechanical transmission system is provided to transmit to the transducer the displacements of the feelers following the contact with the piece. The mechanical transmission system comprises a series of mechanical transmission elements (which might also include a linear measuring head as shown in figure 15) adapted to transform the displacements of the feelers along a transverse measuring direction into longitudinal displacements of a transmission rod connected to the transducer.

Even though a gauge of this kind provides advantages in terms of interchangeability of the components, the contact between the mechanical transmission elements and the transducer device is subjected to frictions which may cause wear of the parts, and negatively affect the measurement.

For the same kind of checking, other kinds of devices feature deformable armsets , that is assemblies of arms carrying feelers and including resiliently deformable portions that define deformable fulcra, enabling the arms to displace, and at least one transducer connected to the armset which detects the displacements of the arms. A measuring system of this kind is disclosed in the US patent No. US4493153 where a flexible, H-shaped element has two arms connected to each other by a thin transverse portion defining a fulcrum around which the arms can rotate. A transducer has one part fixed to one of the arms and a movable part in contact and movable with the other arm. The transducer is for example of a known electromechanical kind, with two parts which axially move one inside the other. When the feelers touch the piece, the arms rotate one with respect to the other about the fulcrum proportionally to the displacement of the feelers. The transducer generates and transmits to a processing unit an electrical signal indicative of the mutual displacement of the feelers. This system has a smaller number of joints, is less complicated than the solution described in the patent application published under No. US 2010/0229414 and has a smaller number of transmission elements, and friction between the different measuring elements is reduced. Nevertheless, it doesn't overcome all the problems due to the contact between armset and transducer during the checking and measuring operations. Such a contact can negatively affect the measurement because of, for example, wear of the components or minimal variations in the mutual arrangement of the different elements. Moreover, this kind of system on the one hand reduces the friction between the components, but on the other hand does not allow interchangeability of the components. A known device for checking dimensions and shape of a mechanical piece is disclosed in US 4,291,466 A1 and includes a stationary support, a mechanical armset, which is connected to the stationary support and comprises one arm carrying a movable feeler, one fulcrum being adapted to enable movements of said arm with respect to the stationary support and one position transducer comprising a first and a second part which are mutually movable.

### Disclosure of the invention

Object of the present invention is to provide a modular checking apparatus which improves the features of the known gauges in terms of flexibility, ease of use and compactness, and overcomes the inconveniences due to frictions . This and other objects are achieved by a checking apparatus according to the attached claims.

The invention relates to an apparatus, more specifically a gauge, for checking dimensions and/or shape of a mechanical piece and/or determining the central axis of a such a piece.

The apparatus includes a stationary support, a movable support connected to the stationary support in a removable way, and a mechanical armset which is in turn connected to the movable support. The armset comprises one or more arms, each of which carries a movable feeler adapted to touch the mechanical piece, and one or more fulcra, each of which is adapted to enable movements of one of the arms with respect to the movable support.

The apparatus further includes one or more position transducers, each of which comprises a first part and a second part which are mutually movable, and power supply and processing electrical circuits coupled to the transducers. The first part and the second part of each transducer are connected to one end of one of the arms of the armset and to the stationary support, respectively. The parts of each transducers face each other and are arranged at a mutual predetermined distance. A variation of such a distance during the checking operations, due to the mutual movements between the two parts following the contact between the feeler and the piece, causes each transducer to generate an electrical measuring signal.

Thanks to the presence of two parts of the transducer facing each other and to the substantial absence of mutual contact- at least during the checking phase - and of mechanical interferences between the two parts, one of the two parts can be easily and quickly removed. It is possible for example to couple the power supply and processing electrical circuits to the second part of the transducer and fix the latter to the stationary support, and on the other hand fix to the armset, which is connected to the movable support, the other part of the transducer which serves as matching element for the first part and is not coupled to the electrical circuits.

The stationary support can include a bearing element, properly positioned, to which one part of the transducer is rigidly connected.

The preferred embodiment of the present invention includes an inductive transducer, with a core and windings, and a matching element with a substantially plane surface, or plate. Both the core and the plate are made of ferromagnetic material. More specifically, the core is fixed to the stationary support of the apparatus and the plate is fixed to one end of the arm of the armset so that it faces the core, or vice versa.

The same configuration, with one "stationary" part coupled to the power supply and processing electrical circuits and fixed for example to the stationary support, and one "movable" matching part without electrical connection and fixed for example to the movable support, can be applied to other kind of transducers, for instance optical or capacitive transducers.

Thanks to the configuration and arrangement of the transducer and to the modularity of the mechanical structure it is possible, within predetermined measuring ranges, to remove the movable support including the armset and the part of the transducer serving as matching element and substitute it with a movable support with a similar structure, whose armset has different features, suitable for the dimensions to be measured/checked. It is possible to do that without removing or substituting also the other part of the transducer, which is coupled to the circuits and fixed to the stationary support, and the stationary support itself.

The insertion of the movable support and the armset portion carrying one of the parts of the transducer into the stationary support, carrying the other part of the transducer, occurs along a transverse direction, more precisely perpendicular, to the direction of the mutual displacement of the two parts of the transducer. This direction is for example parallel to a longitudinal axis defined by the stationary support.

It is sufficient to remove the movable support which is currently mounted on the gauge by performing a movement along such a direction which doesn't cause mechanical interferences between the parts of the transducer and then inserting, with a movement in the opposite sense, a new movable support.

Hence, the modularity of the apparatus enables to provide high flexibility in use and remarkably decrease costs thanks to the structure simplicity and the possibility to use the same transducer, at least the part with the windings connected to the processing circuits, to check different dimensions.

As regards the operation of the transducer, in rest conditions the distance between the two parts of the transducer is defined, depending on the kind of armset and/or stationary support used, by the mutual contact between portions of each transducer part or by abutments provided in the armset itself which constrain the arm position. Rotation movements of the arm about the fulcrum following the contact between feeler and piece cause the part of the transducer connected to the armset to approach or move away from, depending on the kind of armset and/or stationary support used, the part housed in the stationary support. As previously stated, contrary to what happens in the known devices, in the checking phase the two parts of the transducers never come into contact with each other. This enables to overcome inconveniences due to the contact between the different components of the device, for example between the transducer, or a transmission element connected thereto, and the arm carrying the feeler, which can alter the measurement.

A checking apparatus according to the present invention ensures high flexibility in use and the possibility to easily assembly the different components thank to the modularity of the apparatus. More specifically, an apparatus according to the present invention enables to reduce costs and time of substitution of the apparatus components depending on the different dimensions to be checked. Furthermore, it ensures to overcome the inconveniences due to frictions between the parts of the armset during the checking operations.

In the preferred embodiment of the invention, the core carrying the windings can be made of MUMETAL® that is a metallic alloy composed of different percentages of nickel, iron, copper and molybdenum and notable for its high magnetic permeability. The use of this metallic alloy grants the possibility to have high flexibility both in terms of geometrical shapes and dimensions that can be obtained. This represents a big advantage with respect to known solutions featuring the core made, for instance, of ferrite, a material whose working is by far harder. The high workability of the MUMETAL enables indeed to obtain cores whose dimensions and shapes are suitable for the specific type of checking which has to be performed. While the geometrical shapes and dimensions of the cores made of ferrite and available on the market are limited, MUMETAL, that, contrary to the ferrite, can be machined by machine-tools, ensures a high flexibility, allowing to obtain particular shapes not bound to predetermined dimensions. It is possible for example to obtain cores having smaller dimensions than the traditional cores made of ferrite while generating the same magnetic field. This provides remarkable advantages not only in terms of overall dimensions but also in terms of production costs. Even though it is not essential to the transducer operation, even the plate connected to the arm, or at least its substantially plane surface facing the corresponding core, can be made of MUMETAL and have the same advantages in terms of flexibility in getting shapes and dimensions, as described with reference to the core.

A further, important advantage of using the MUMETAL is the possibility to fix the magnetic core, and the plate if it is made of MUMETAL too, to the corresponding support by laser welding. Contrary to the cores made of ferrite which are fixed by gluing, the welding enables to avoid problems due to a wrong positioning of the transducer caused for example by a gluing which is wrongly made or is less resistant, or by unwanted and undetected displacements of the parts owing to thermal expansions of the glue. The fixing technique by welding can be used for any core independently from its shape or dimension.

Two transducers connected to respective arms and feelers can be used in an apparatus according to the present invention. This enables not only to measure and checking dimensions of a mechanical piece but also to determine the central axis of the piece in a Cartesian plane. Indeed, by computing the half difference of the measures of the single transducers, it is possible to determine the position of the central axis of the piece in a plane defined by the checking direction of the feelers.

### Brief description of the drawings

An apparatus for checking dimensions of a mechanical piece according to the present invention is hereinafter described with reference to the attached sheets of drawings given by way of non-limiting examples, wherein:
- figure 1 is a partial, longitudinal section of a gauge for checking the internal dimensions of a mechanical piece with rotational symmetry;
- figure 2 is a very schematic representation of one part of the gauge of figure 1 according to an alternative embodiment;
- figure 3 is a partial longitudinal section of a gauge for checking external dimensions of a mechanical piece with rotational symmetry;
- figure 4 is a perspective view of a gauge for checking the external dimensions of a cylindrical piece;
- figure 5 is a top view of one part of the gauge of figure 4;
- figure 6 is a very schematic representation of an alternative embodiment of the gauge of figure 4;
- figure 7 is a cross-sectional view of a checking apparatus according to a different embodiment; and
- figure 8 is a very schematic and partial representation of a different embodiment of the gauge of figure 1.

### Best mode for carrying out the invention

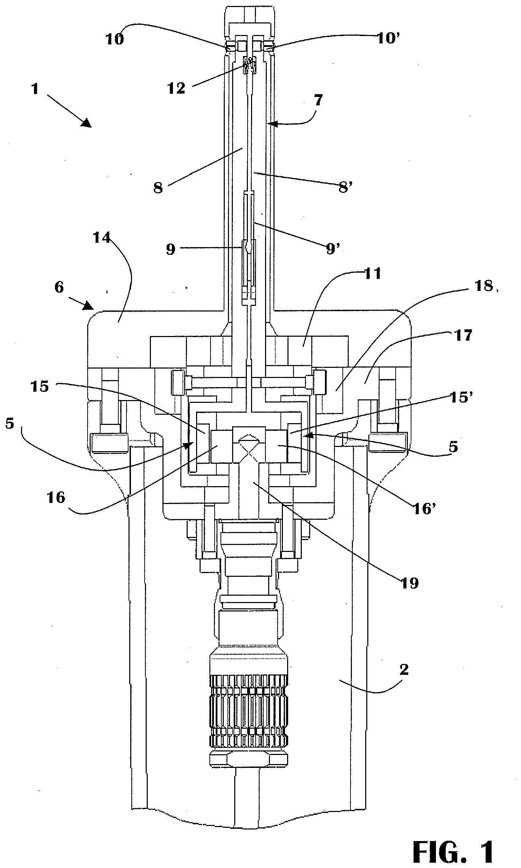

Figure 1 shows a checking apparatus, in particular an electrical plug gauge to manually check internal diameter dimensions of a mechanical piece.

The plug gauge 1 includes a support and protection frame with a hollow handle 2 defining a longitudinal axis and can be shaped so as to include an ergonomic middle portion. The ergonomic shape is per se known and is not shown in figure 1 where only a part of the handle is shown.

A movable support 6 is connected to the handle 2 and includes a centering nosepiece 14. The nosepiece 14 shown in figure 1 is aimed at measuring and checking holes with small diameter and great depth. If the hole has greater dimensions, the nosepiece 14 has a greater diameter and its end can be closed by a protection cover.

The movable support 6 further includes a central body 11 to which a mechanical armset 7 is connected. The armset 7 comprises movable feelers 10, 10' which touch the surface of a cylindrical hole to be checked at opposite positions. The nosepiece 14 has two diametrically opposite holes through which the feelers 10, 10' pass.

Figure 1 shows a typical armset for a plug gauge comprising two arms 8, 8', each of which is connected to the central body 11 by means of a fulcrum 9, 9' and carries one of the movable feelers 10, 10' at one of its ends. Each fulcrum 9, 9' defines a geometric axis about which the respective arm 8, 8' can perform angular movements. Such fulcra can include for example elements defining resiliently deformable portions. In the embodiment of figure 1, the distance between the ends of the arms 8, 8', opposite to the ends carrying the feelers 10, 10', is greater than the distance between the rest of the arms thanks to the presence of two portions transverse to the extension of the arms. This way the ends of the arms 8, 8' are still parallel but lie to a greater distance.

This configuration of the armset is suitable for the structure of the plug gauge as shown in the figure. However, it is possible to have an armset without transverse portions so that all the portions of the arms lie at the same distance.

A thrust device 12, for example an elastic element such as a spring, is placed between the two ends of the arms 8, 8' carrying the feelers 10, 10' so that it applies a force urging the feelers to move away from each other keeping them in touch with the surfaces to be checked.

The central body 11 has two longitudinal through holes, parallel to each other and not shown in the figure, which serve to fix it to the nosepiece 14. The end of each arm 8, 8' opposite to the one carrying the feeler 10, 10' has transverse abutment surfaces which cooperate with lower surfaces of the nosepiece 14 and ensures that the armset 7 is positioned correctly.

Two position transducers 5, 5' are housed in the handle 2 of the plug gauge 1 and each includes two parts which face each other, are mutually movable and lie at a predetermined distance. More specifically, each transducer 5, 5' includes a first part consisting of a matching element with a substantially plane surface made of ferromagnetic material, or plate 15, 15', and connected to the end of each arm 8, 8' of the armset opposite to the end carrying the feeler 10, 10', and of a second part, to which each plate 15, 15' is facing, consisting of a core 16, 16' made of ferromagnetic material with windings and connected to a stationary support 17. The core 16, 16' can be, for example, a pot core, that is with the shape of a hollow cylinder which is closed at the base and houses windings.

The two cores 16, 16' are housed and fixed to a central bearing element 19 forming a central portion of the stationary support 17 so that the surface of each core 16, 16' adapted to couple to the respective plate 15, 15', hereinafter defined as measuring surface, is substantially parallel to the respective plate 15, 15' in rest conditions and the measuring surfaces of the two cores 16, 16' thus face in the opposite senses. In rest conditions, the mutual position of the parts of the transducers 5, 5' is determined by the presence in the armset of mechanical abutment elements which constrain the positon of the arms 8, 8'. In operative conditions, that is during the checking phase, the angular movement of the arms 8, 8' about the fulcra 9, 9' causes a variation in the mutual distance between the core 16, 16' and the plate 15, 15'. In the described embodiment the distance variation means that the plate 15, 15' move away from the core 16,16'.

The stationary support 17 has a central opening 18 to insert the central body 11 and the portion of the armset 7 carrying the plates 15, 15' into the stationary support 17 in such a way that each plate 15, 15' faces the measuring surface of the corresponding core 16, 16'. It is possible that during the checking operations the plate 15, 15' and the core 16, 16' are not perfectly parallel. This can't be avoided, but it has no significant consequences on the measurement in terms of measuring field, linearity of the transducer and pre-stroke of the gauge. However, it is possible to adjust the position of the cores 16, 16' on the stationary support 17 in such a way that they are inclined and the plates 15, 15' are as parallel as possible to the respective measuring surfaces of the cores 16, 16' in correspondence of an operative mutual position between cores and plates during the angular movements of the latter.

The upper portion of the stationary support 17 includes through holes serving to fix it to the central body 11 of the armset 7 and to the support and protection frame. The opening 18 has shaped surfaces which are used as reference and guide the insertion of the central body 11 of the movable support 6 in a way per se known and not shown in the figure. Thanks to the configuration of the transducers and to the structure modularity, the movable support 6 carrying the armset with the plates 15, 15' can be easily inserted into and removed from the stationary support 17 by performing longitudinal movements and without changing the position of the cores 16, 16'. In other words, the movable support 6 is connected to the stationary support 17 in a removable way.

The operation of each of the transducers 5, 5' is known and is hereinafter described in general terms.

The windings of the core 16 (16') are fed by an alternating current generating a magnetic field which interacts with the plate 15 (15') and induces a current in the plate itself. This current generates its own magnetic field which opposes the magnetic field of the windings. A circuit is coupled to the core 16 (16') and indicates the impedance.

When one of the parts of the transducer 5 moves with respect to the other because of, in the embodiment of figure 1 for example, the contact between the piece and the feeler 10 (10') and the consequent angular movement of the arm 8 (8') carrying the plate 15 (15'), the impedance of the circuit varies. The impedance variation can be observed by detecting the voltage variation across the circuit.

In the plug gauge shown in figure 1, the signals generated by the transducers 5, 5' are transmitted to a processing unit by a cable. A connector, per se known, can be provided inside the handle 2 and fixed to the stationary support 17. It is also possible to omit such a connector or transmit the signals wirelessly.

Moreover, it is possible to combine the signals generated by the single transducers 5, 5' inside the stationary support 17 by means of processing means positioned inside the stationary support itself so as to reduce the number of wires at the exit of the gauge.

In the embodiment described above and shown in figure 1, the gauge has a mechanical armset including two arms with as many feelers, two fulcra and two transducers. However, the gauge can comprise a lower number (one) or higher number (at least three) of transducers and an armset with a corresponding number of arms, feelers and fulcra.

In an alternative embodiment the two cores 16, 16' fixed to the stationary support aren't connected to the central bearing element 19 but rather to side walls inside the stationary support 17 so as to face one another. As a consequence, also the position of the plates 15, 15' is different, more specifically reversed, with respect to the one in the armset previously described. In other words, the plates 15, 15' are mounted on the external side of each arm 8, 8' so as to face the corresponding core 16, 16'. In this case the shape and the arrangement of the arms 8, 8' can be different from what it is shown in figure 1. For example, the two arms 8, 8' can cross at an intermediate point between the ends so that during the checking phase the parts of the transducers 5, 5' move away from each other when the feelers 10, 10' perform measuring displacements by approaching each other, as in the embodiment of figure 1. This different configuration of the armset (including the crossing of the arms) can also be applied to an embodiment where the cores 16, 16' are arranged as in figure 1 in order to transform the measuring displacements of the feelers 10, 10' into mutual approaching movements of the parts of the transducers 5, 5'.

In rest conditions, the arms 8, 8' are suitably positioned to ensure a correct and predetermined pre-stroke of the gauge. Such positions can be defined by suitable mechanical abutments against which portions of the arms 8, 8' are urged by the spring 12, or by the contact between the plate 15, 15' and portions of the respective core 16, 16' or close areas of the stationary support 17, 17'.

Only in the embodiments where the rest position of the arms is defined by the abutment between the parts of the transducer, the armset can be configured in such a way that during the mounting phase each arm 8, 8' must perform an additional angular movement before reaching the pre-stroke position. This ensures that when the stationary support 17 is mounted on the movable support 6, each plate 15, 15' contacts, for example, the respective core 16, 16' so as to maintain the contact, urged by the spring, and define the proper pre-stroke of the gauge. This also ensures that the same pre-stroke value is maintained if the movable support 6 is substituted.

As previously stated, a spring 12 is connected to the arms 8, 8' of the armset, for example close to the feelers 10, 10', to ensure the contact between the feelers 10, 10' and the piece to be checked. It is possible to set the dimensions of the spring and include suitable mechanical abutments in the movable support 6 so that the thrust applied by the spring 12 is such that, before connecting the movable support 6 to the stationary support 17, the arms 8, 8' are more inclined with respect to the longitudinal axis of the armset than they are when the movable support 6 is connected to the stationary support 17. During the mounting phase, that is when the movable support 6 is inserted in the stationary support 17, there is a slight interference between the plate 15, 15' connected to the lower end of each arm 8, 8' and the surface of the corresponding core 16, 16' or the stationary support 17. This interference is sufficient to cause angular movements of the arms 8, 8' about the fulcra in opposition to the thrust applied by the spring 12. When the movable support 6 has reached its final position, such angular movements terminate and the rest position of each arm 8, 8' is defined by the abutment between the late 15, 15' and the core 16, 16', for example between the lower end of the plate and the core or between the lower end of the arm and the core support. During the operation of the gauge, following the contact of the feeler 10 (or 10') with the piece to be checked the arm 8 (8') performs an additional angular movement about the fulcrum 9 (9') and the plate 15 (15') moves away from or approaches the core 16 (16') proportionally to the displacement performed by the feeler 10 (10') taking or maintaining a position substantially parallel to the measuring surface. To facilitate the abutment between the plate 15, 15' and the core 16, 16', or the arm 8, 8' and the core support, and thus the angular movement of the arm 8, 8' during the mounting of the armset, the plate 15, 15' and/or the core 16, 16', or the arm 8, 8' and the stationary support 17, can include lead inclined surfaces.

The described mounting system ensures not only that the plate 15, 15' takes the correct position with respect to the core 16, 16' before the measuring operations, but also that the gauges obtained by assembling different movable supports 6 to the same stationary support 17 all have the same pre-stroke without needing to mechanically and/or electrically adjust the transducer each time.

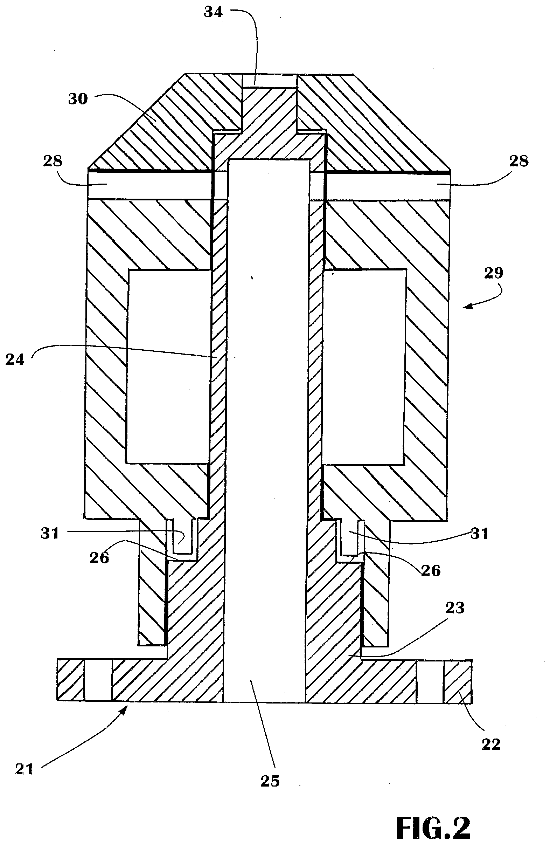

As working the movable support 6 of plug gauges for large diameters can be particularly expensive, according to an alternative solution the nosepiece 14 can be divided into separate components to be assembled. More particularly, according to such a solution shown in figure 2, the most complicated and expensive component, has a standard dimension, while the other components, which are less expensive and can be machined more easily, have different dimensions depending on the diameter to be checked.

A base component includes a base support 21 with a longitudinal opening 25 to house the mechanical armset. The support 21 has three portions of different diameter. A portion of larger diameter 22 which can be fixed to the handle of the plug gauge and include through holes to house fastening means such as screws, a portion of intermediate diameter 23 with grooves 26 serving to fix an external cylindrical casing 29, and a portion of smaller diameter 24 adapted to be inserted inside the cylindrical casing 29 and including holes 28 through which the armset feelers pass. A closing and fixing element 30 is fixed to the upper end of the portion of smaller diameter 24 of the support 21, for example by means of a threaded coupling.

The diameter dimensions of the external cylindrical casing 29 corresponds to the diameter dimensions of the piece to be checked, i.e. "matches" the diameter of the hole to be checked allowing the feelers to properly touch the hole surface, except for a lower section of smaller diameter to fix the cylindrical casing 29 to the base support 21. Such a section includes a couple of centering and antirotation elements 31, for example pins, which protrude from the lower side of the casing and are inserted in the grooves 26 of the portion of intermediate diameter 23 of the base support 21. The whole structure of the cylindrical casing 29 is hollow to house the base support 21. In the upper side of the cylindrical casing 29 there are two radial openings through which the feelers pass.

The assembly composed of base support 21 and cylindrical casing 29 is closed and fixed by means of the closing and fixing element 30, that is a cover which is for example trapezoidal shaped and connected, as previously stated, to the base support 21.

The closing and fixing element 30 can also have, as shown in figure 2, a central hole in which a guide element (not shown) is inserted. When the guide element couples to the properly shaped upper end of the portion of smaller diameter 24 of the support 21 ensures that the closing and fixing element 30 is centered with respect to the support 21.

This alternative solution for the manufacture of the nosepiece 14 of the plug gauge provides several advantages. First of all, the structure of the single components of the nosepiece is simple and it is thus easier and less expensive to machine than the structure of the traditional nosepieces. Moreover, as the base component is separated from the external casing, when it is necessary to check different diameters it is sufficient to remove just the external casing, that is the cylindrical casing 29, substitute it with a casing whose dimensions correspond to the dimensions to be checked and mount the latter on the base component.

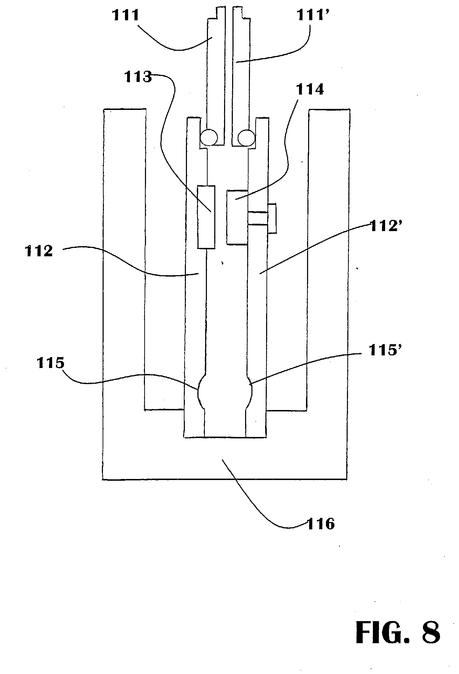

A different embodiment of a gauge which includes a transducer similar to the transducers 5, 5' of figure 1 and shown schematically and partially in figure 8, comprises only one transducer with a core 114 and a plate 113 and a mechanical armset with two arms 111, 111' each carrying a feeler and being movable thanks to the presence of fulcra (feelers and fulcra are not shown in the figure). The plate 113 and the core 114 of the transducer are fixed to two pivotable elements connected to a support 116, more specifically two rods 112, 112' with one end connected to the support by means of resiliently deformable portions defining fulcra 115, 115'. The other end of each rod 112, 112' comprises a seat. Such rods 112, 112' are in touch with the arms 111, 111' carrying the feelers through mechanical transmission elements, for example balls fixed to the arms 111, 111' and housed in the seats which the rods 112, 112' have at one end. Transverse movements of the feelers make the arms 111, 111' move and transmit their movements, through the balls, to the pivotable elements 112, 112', causing variation of the mutual distance between the plate 113 and the core 114. The transducer consequently generates a signal according to such variation.

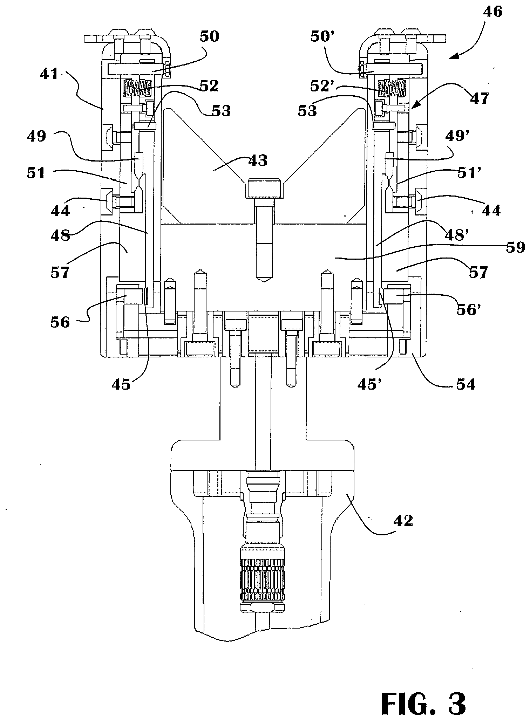

Figure 3 shows a different kind of gauge, that is a so-called snap gauge for measuring and checking external dimensions of a mechanical piece.

A movable support 46, preferably machined from the solid, includes a frame 41 with a reference element 59 with a V-shaped seat 43 for positioning the mechanical piece and two diametrically opposite holes through which the feelers pass. In the side walls of the frame 41 there are seats 57 for housing a mechanical armset 47 which is similar to the armset described with reference to the plug gauge and is connected to the frame 41. The armset includes two arms 48, 48' each carrying a feeler 50, 50' at one end and a plate 45, 45' at the other end. The plates 45, 45' form the first parts of transducers. Each arm 48, 48' is connected by means of a deformable fulcrum 49, 49', more specifically an element including a resiliently deformable portion that defines the fulcrum, to a bearing ad fastening element 51, 51' which is fixed to the frame 41 by means of fastening elements, for example screws, indicated in the figure with the reference number 44. Between each arm 48, 48' and the respective bearing element 51, 51' there is a spring 52, 52' which urges the feelers 50, 50' against each other to ensure the contact with the piece to be checked.

Abutment elements, for example fixed to the arm 48, 48', can be provided between each arm 48, 48' and the bearing element 51, 51' to limit the rotational movements of the arm 48, 48' about the respective fulcrum 49, 49'.

When the snap gauge is assembled, each arm 48, 48' of the armset 47 is inserted in one of the seats provided in the side walls of the frame 41 and is fixed to the frame 41 by means of the corresponding bearing element 51, 51'. The feelers 50, 50' are housed in the holes of the frame 41 to touch the piece to be checked. In the preferred embodiment of the snap gauge according to the invention, the frame 41 includes lateral openings on the walls which face the reference element 59 and the V-shaped seat 43. Each lateral opening enables to rapidly and easily insert and fix the armset 47 in the dedicated seats 57 inside the frame 41. After the armset 47 has been positioned, the reference element 59 with the V-shaped seat 43 is inserted to close the lateral openings of the frame 41. The lower side of the frame 41 is left open to insert a stationary support.

The stationary support includes a U-shaped tubular casing 54 with opposite vertical portions which carry two cores with windings 56, 56' forming second parts of the transducers. The vertical portions are inserted in the seats of the side walls of the frame 41 housing the armset 47, and the horizontal portion of the casing 54 is in contact with the lower wall of the reference element 59 and is fixed to the lower end by means, for example, of rivets providing a compact and solid structure.

The cores 56, 56' are fixed, protruding from the wall, to the vertical portions of the casing 54 in such a way that the two cores 56, 56' are opposite. After the casing 54 has been positioned correctly with respect to the frame, the measuring surface of each core 56, 56' faces the corresponding plate 54, 54' fixed to the arm 48, 48' of the armset. The casing 54 houses the electrical cables at the exit of the cores 56, 56' which are connected directly or through a connector, as shown in the figure, to additional electrical cables for signal transmission housed in the handle. The handle is fastened to the casing 54 for example by means of rivets.

According to an alternative embodiment, the lateral openings of the frame are positioned on the external sides of the frame, that is the sides opposite to the one facing the reference elements 59 with the V-shaped seat 43 referring the piece to be checked. In this case, the casing 54 is built in such a way that the extension of the vertical portions is greater than the extension of the portions shown in the figure. In this way, when the vertical portions are inserted in the side walls of the frame, they close the lateral portions of the frame enclosing the armset. As it is necessary to ensure the possibility to act on the feelers, the dimensions of casing 54 are such that the vertical portions do not close the holes in the frame through which the feelers 50, 50' pass.

As the single components are mutually fastened, this gauge has a compact and very solid structure which overcomes the problems due to external stresses which may arise during the checking operations. Anyway, it provides the same advantages in terms of removability of the movable support with respect to the stationary support as the plug gauge previously described.

Even the armset of the snap gauge can be mounted in such a way that a predetermined pre-stroke similar to the one described for the plug gauge is obtained. For a more detailed description reference is made to the armset mounting system previously described.

Both the snap gauge and the plug gauge previously described can be provided with a handle and include a protecting frame for the electrical circuit.

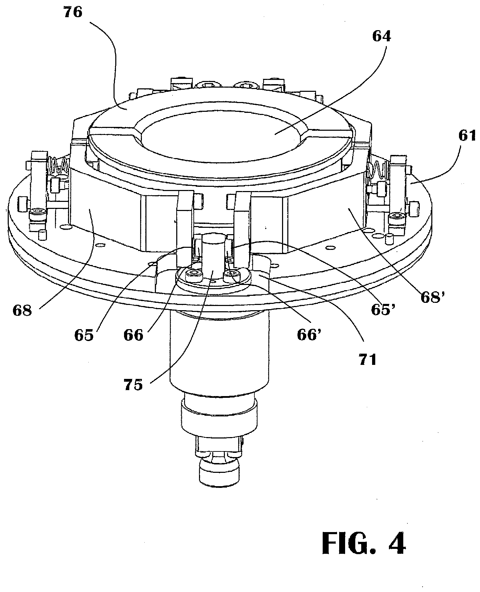

Figures 4 to 6 show two different embodiments of an additional kind of gauge, so-called ring gauge, for checking external diameter dimensions of pieces with a cylindrical surface.

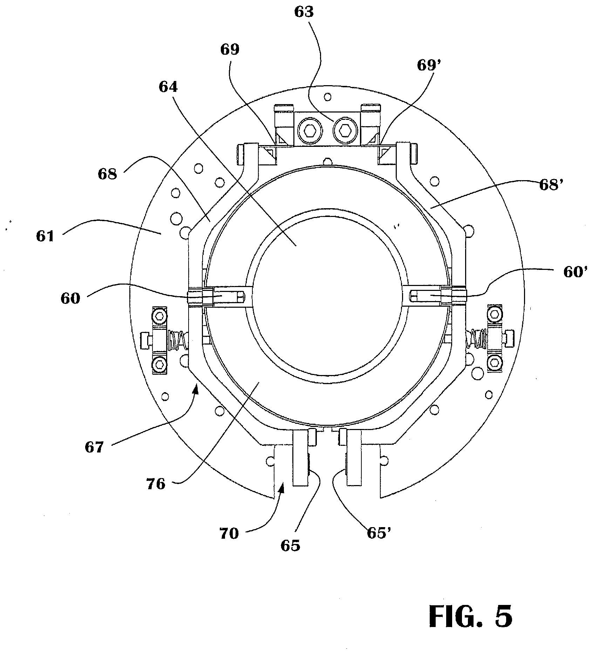

The gauge shown in figures 4 and 5 includes a substantially annular movable support 61, or ring support, with a flange 63 for fixing the mechanical armset 67. A centering nosepiece 76 is fixed in the center of the ring support 61 and includes a cylindrical cavity 64 adapted to house the piece to be checked. The mechanical armset 67 comprises two substantially C-shaped arms 68, 68'. One end of each arm is fixed to the ring support 61, in particular a flange 63, by means of fulcra 69, 69' each defined by a couple of intersecting laminae connected to blocks, which are fixed to the flange 63 and the arms 68, 68', respectively. The fulcra define two geometrical axes perpendicular to the plane of the ring support 61 about which the arms 68, 68' perform angular movements with respect to the ring support 61. The configuration of the arms and the fulcra can also be different from what has been described and shown in the figures. For instance, the arms can be substantially in the shape of half a circle and be part of an armset with a fastening portion, similar to the flange 63, and integral fulcra consisting, for example, of thinner portions between the fastening portion and the arms. The free ends of the arms 68, 68', opposite to the ones fixed to the flange 63, carry a couple of plates 65, 65' which form the first parts of respective transducers and face each other. In a middle point of the longitudinal extension of each arm 68, 68' there is a hole to which a feeler 60, 60' is threadedly coupled.

There are also abutment elements to limit the movements of the arms and one or more thrust elements to ensure the contact between the feelers 60, 60'and the piece to be checked.

The ring support 61 includes a space 70 at the ends of the arms 68, 68' carrying the plates 65, 65'.

Figure 4, where the whole ring gauge is illustrated, shows a stationary support 71 which has a circular shape and dimensions analogous to those of the movable support 61 and includes a cylindrical cavity corresponding to the one defined by the nosepiece 76. The stationary support 71 includes a prop 75, arranged at the space 70 of the ring support 61, to which two cores 66, 66' forming the second parts of the transducers are fixed in such a way that the measuring surfaces face in the opposite sense. The stationary support 71 is connected to the ring support 61 for example by means of screws in such a way that the prop 75 carrying the cores 66, 66' is placed between the ends of the arms 68, 68' carrying the plates 65, 65' and each plate faces the respective core 66, 66'.

After the contact between the feelers 60, 60' and the surface of the piece to be checked, the arms 68, 68' rotate about the fulcra 69, 69', the ends of the arms 68, 68' carrying the plates 65, 65' displace away from the cores 66, 66' and the variation of the mutual distance between plates and cores generates an electrical signal. The electrical cables of each transducer are coupled, through a connector for example, to power supply and processing circuits.

A closing element, such as a tinplate cover - not shown in the figures - can be fastened to the ring support 61 for example by means of screws. The closing element is annular shaped and includes a central hole aligned with the cavity of the movable support 61 and the stationary support 71 housing the piece to be checked.

Furthermore, the gauge can be provided with a handle or handgrip connected to the stationary support 71 and perpendicular to the plane in which the stationary support 71 lies.

As previously stated with reference to the other kinds of gauges, the particular configuration and arrangement of the transducers and the presence of a mechanical part, comprising the movable support 61, which is connected in a removable way to the stationary transducer part, comprising the stationary support 71, enables to substitute the mechanical armset without removing and/or substituting the stationary support and consequently the cores 66, 66' forming the part of the transducers coupled to the power supply and processing circuits.

A solution in which the stationary support 71 and the movable support 61 are fixed permanently, as parts for example of a single piece, is also possible.

This solution, however, keeps only a part of the advantages of the embodiment described and shown in figure 1.

It is also possible to have a ring gauge as the one shown in the figures 4 and 5 but including only a transducer, that is a plate fixed to one of the arms and a core fixed to the other arm. The stationary support is substituted with a closing casing to which a possible handgrip may be fixed.

The structure of this embodiment is simpler than the one of the gauges including differential transducers wherein the coupling between core and windings is more critical than that one in the transducers used in the present invention. However, the presence of a transducer with both the parties fixed to the mechanical part of the gauge, that is to the armset, doesn't allow the same advantages in terms of modularity and flexibility in use provided by the previously described embodiment of the ring gauge with a couple of transducers. In other words, it is not possible to remove the mechanical armset without removing also the transducer part coupled to the power supply and processing circuits.

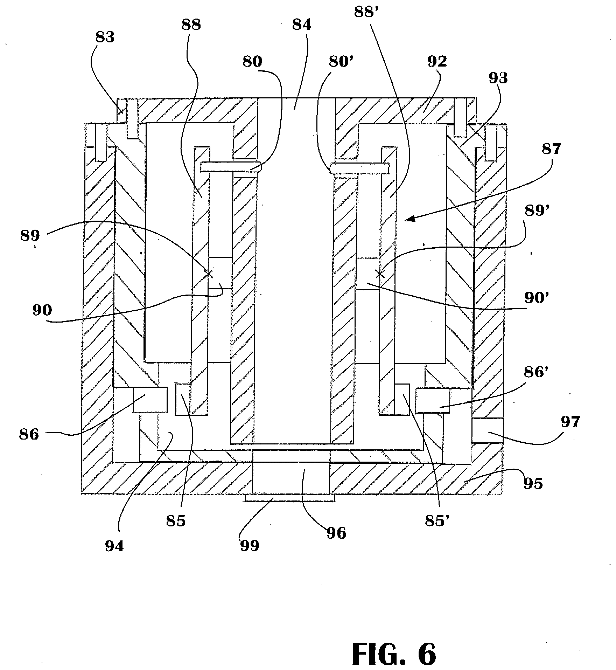

Changing the structure of the ring gauge shown in figures 4 and 5, in particular the arrangement of the armset and the transducers with respect to the surface of the piece to be checked it is possible to obtain a ring gauge as the one shown schematically in figure 6. Like the gauge of figures 4 and 5, the ring gauge of figure 6 provides the advantages related to the use of inductive transducers as the ones hereinbefore described. It also provides advantages in terms of modularity and possibility to easily assembly the different components, that is the possibility to substitute the mechanical armset without removing and/or substituting also the parts of the transducers coupled to the electrical circuits. Moreover, as in the gauge of figures 4 and 5, the use of two transducers enables to increase the types of checking that it is possible to carry out on the piece. It is possible for example not only check the diameter dimensions but also determine the position of the central axis of the piece in a known way, by checking for instance different cross-sections of the mechanical piece.

A movable support 92 includes a cylindrical portion, which defines a centering nosepiece and includes a first central longitudinal opening 84 adapted to house the piece to be checked, and a first upper flange 83 which protrudes from the perimeter of the movable support 92 and comprises through holes, for example four holes arranged in such a way that they form angles of 90° with respect to each other. A mechanical armset 87, whose features are similar to those of the gauges hereinbefore described, is connected to the movable support 92. The armset 87 comprises two arms 88, 88' each carrying at one end a movable feeler 80, 80' sticking out from the internal wall of the movable support 92, through dedicated holes, in the opening 84, and at the other end a plate 85, 85' forming the first part of the transducers. Each arm 88, 88' is connected by means of a fulcrum 89, 89', schematically represented by a cross, to a bearing element 90, 90' which has two transverse fastening portions, not shown in the figures, with through holes to fix the arms to the external wall of the movable support 92 by means, for example, of screws. Preferably, the portions of the external wall to which the arms are fixed has plane surfaces.

Between the arm 88, 88' and the bearing element 90, 90' there are (not shown) also a spring to ensure the contact between feeler 80, 80' and piece to be checked and abutment elements to limit the movements of the arm 88, 88'.

According to an alternative embodiment (not shown) the movable support 92 has an external perimetrical wall with larger thickness which includes two diametrically opposite seats. One of the arms 88, 88' of the armset 87 is fixed at each seat.

A stationary support 93, which is cylindrical shaped and includes a second upper flange protruding from the side walls and provided with through holes, comprises a central cavity 94 the dimensions of which are such as to house the movable support 92. The cavity 94 has reduced diameter dimensions in the lower part where two cores with windings 86, 86' are housed in seats in the perimetrical wall of the stationary support 93. The cores, forming the second parts of the transducers, are fixed to the stationary support 93 in such a way as to face each other and have the measuring surface facing the inside of the cavity 94. When assembling the ring gauge, the movable support 92 is inserted in the stationary support 93 so as to be positioned inside the cavity 94. The movable support 92 enters the stationary support 93 until the flange of the movable support 92 is in contact with the flange of the stationary support 93. The movable support 92 is fastened to the stationary support 93 by means of fastening means, for example screws, inserted in the holes of each flange. The movable support 92 is thus connected to the stationary support 93 in a removable way.

The lower side of the stationary support 93 includes a central opening with shape and dimensions analogous to those of the opening 84 to house the mechanical piece.

After the movable support 92 has been inserted in and fastened to the stationary support 93, each plate 85, 85' of the armset 87 faces the corresponding core 86, 86'.

Also the external wall of the stationary support 93 has a smaller diameter in the lower part housing the cores 86, 86' than the rest of the support. A cylindrical casing 95 is fixed to the section with reduced diameter of the stationary support 93. The cylindrical casing 95 includes a central opening which has shape and dimensions analogous to those of the movable and stationary supports. The gauge substantially includes one longitudinal through opening defined by movable support 92, stationary support 93 and casing 95 to house the mechanical piece.

The casing 95 includes two passages 96, 97 for the electrical cables of the transducers: the first passage 96 is longitudinal, is provided in the lower side of the casing and corresponds to the opening housing the mechanical piece. The second passage 97 is radial and is provided in the perimetrical wall of the casing 95. Thanks to the presence of two passages in different areas of the casing 95, the cables can pass through the passage which is more convenient to mount the gauge. Moreover, as the structure of the casing is symmetrical, it is possible to fix it to the stationary support 93 in such a way that the passage 97 located on the perimetrical wall is in the desired angular position of the gauge. It is possible to mount a cable gland or a connector in the passages 96, 97 and, if necessary, cover the passage that is not used with a closing element, such as a sheet (like the one indicated in figure 6 with the reference number 99). A handgrip or handle can be fixed to the lower side of the casing 95 and to increase flexibility in use it can be positioned in two different ways with respect to the symmetry axis shared by the movable support, the stationary support and the casing. More specifically it can be mounted longitudinally or radially, that is perpendicular to the symmetry axis.

If the handle is mounted radially, it is fixed to the casing 95 by means, for example, of a flat, L-shaped coupling element. The coupling element includes through holes to fix it to the handle and to the casing 95 and an opening on each side through which the cables pass.

Both the movable support 92 and the stationary support 93 can include plane antirotation surfaces which cooperate with each other to define the mutual angular arrangement between the movable support 92 and the stationary support 93. In other words, the antirotation surfaces guide the insertion of the movable support 92 in the stationary support 93 ensuring the correct mutual positioning, and prevent mutual axial rotations between the two of them.

Also the armset of the ring gauge can be mounted in such a way as to ensure a predetermined pre-stroke similar to the one described with reference to the plug gauge and to which reference is made for a more detailed described.

The plug gauges, snap gauges and ring gauges described above, except for the gauges including only one transducer, includes armsets with couples of arms and transducers. However, to increase the number of checking or measuring points on the piece to be checked, especially in plug gauges, it is possible to use armsets with three arms and as many transducers arranged in such a way that they form angles of 120° with respect to each other, or four arms and as many transducers arranged in such a way as to form angles of 90° with respect to each other. To reduce overall dimensions, the arms can have different length so that the transducers are mounted on different, axially separated cross-sections inside the gauge.

If it is necessary to check more diameters of the same piece, the gauge structure can be modified suitably so as to house a plurality of armsets with respective feelers, which touch the mechanical piece at different cross-sections.

As previously stated, the described gauges not only enable to check the dimensions of the piece to be checked but can also determine the central axis of the piece, in particular the axis position at one or more axially separated cross-sections of the mechanical piece, in a per-se known way. The main embodiment comprising an armset with a couple of arms and a couple of transducers enables to determine the central axis of the piece in an axial plane. To determine the central axis of the piece in two axial planes of the same cross-section it is sufficient to perform an additional checking operation at different points of the mechanical piece by simply rotating the gauge or, depending on the gauge configuration, doubling the number of arms and transducers and positioning them so that they form angles of 90° with respect to each other, as previously stated.

To determine the position of the central axis of the mechanical piece at more axially separated cross-sections of the piece, it is sufficient to perform a first checking operation and axially move the gauge inside the mechanical piece to carry out additional checking operations at different cross-sections.

As an alternative, it is possible to carry out more checking operations at different, axially separated cross-sections of the mechanical piece by changing the gauge structure suitably, so that it includes more feelers touching the piece at the different cross-sections.

By combining more gauges it is also possible to determine the concentricity of one part of the mechanical piece with respect to another one in a per-se known way.

The above described gauges can be manually operated by an operator but they can also be fixed to suitable supports and used in automatic measuring assemblies.

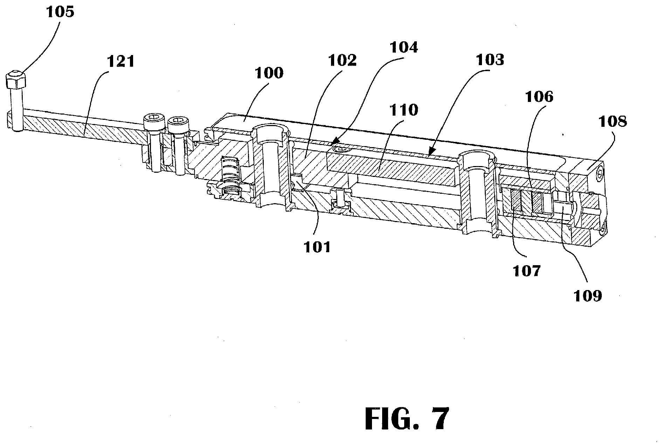

Also a gauge, shown in figure 7, which includes a movable support 100, or a parallelepiped elongate casing in the embodiment shown, with two openings at two opposite ends, falls within the scope of the present invention.

The casing 100 houses a mechanical armset 103 with an arm 104, which is connected to the casing 100 by means of an elastic, laminar element defining a fulcrum 101. In figure 7 the arm 104 comprises a first portion 102 and a second portion 110 which are connected to each other, but it can also be manufactured as one piece. The arm 104, more specifically the first portion 102 has one end which protrudes partially from one of the openings of the casing 100 and carries a feeler 105. In the embodiment shown in figure 7, the feeler 105 is connected to the first portion 102 of the arm 104 by means of a connecting element 121. However, the connecting element 121 can be omitted and the feeler 105 can be connected to the first portion 102 directly.

The other end of the arm 104, more specifically of the second portion 110, carries a plate 106 forming the first part of a transducer.

A core 107, forming the second part of the transducer, is connected to a stationary support 108, which is parallelepiped in this case. The stationary support 108 is connected to the movable support 100, more specifically it partially enters the opening of the movable support 100 which is opposite to the end from which the end of the arm 104 carrying the feeler 105 protrudes. The stationary support 108 is fastened to the movable support 100 by means of fastening elements, such as screws, to close the opening of the movable support 100.

The core 107 is fixed to a prop 109 integral with the stationary support 108 in such a way that its measuring surface faces the plate 106.

Even this kind of embodiment enables to remove the movable support 100 and substitute it with another one, which has the desired dimensions without removing also the transducer parts fixed to the stationary support 108 and coupled to the power supply and processing circuits.

The gauge shown in figure 7 can also be configured in such a way as to comprise more transducers and an armset with a corresponding number of arms.

## Claims

1. Apparatus for checking dimensions and shape of a mechanical piece including
- a stationary support (17;54;71;93;108),
- a movable support (6;46;61;92;100) which is connected to the stationary support (17;54;71;93;108) in a removable way,
- a mechanical armset (7;47;67;87;103) which is connected to the movable support (6;46;61;92;100) and includes one or more arms (8,8';48,48';68,68';88,88';104), each of which carries a movable feeler (10,10';50,50';60,60';80,80';105) adapted to touch the mechanical piece, and one or more fulcra (9,9';49,49';69,69';89,89';101), each of which is adapted to enable movements of one of said arms (8,8';48,48';68,68';88,88';104) with respect to the movable support (6;46;61;92;100),
- one or more position transducers, each of which comprises a first part (15,15';45,45';65,65';85,85';106) and a second part (16,16';56,56';66,66';86,86';107) which are mutually movable,
- power supply and processing electrical circuits coupled to each of said one or more transducers,
**characterised in that** said first part and second part of each one of said transducers face each other and are arranged at a mutual predetermined distance, a variation of said mutual distance due to the touch between the feeler (10,10';50,50';60,60';80,80';105) and the piece causing the generation of an electrical measuring signal, and
that the first part (15,15';45,45';65,65';85,85';106) and the second part (16,16';56,56';66,66';86,86';107) of each of said one or more transducers are connected to one end of one of said arms (8,8';48,48';68,68';88,88';104) of the armset (7;47;67;87;103) and to the stationary support (17;54;71;93;108), respectively.

2. Apparatus according to claim 1, wherein one and another of said first part (15,15';45,45';65,65';85,85';106) and second part (16,16';56,56';66,66';86,86';107) of each of said one or more transducers include a matching element with a substantially plane surface made of ferromagnetic material and a core made of ferromagnetic material with windings, respectively.

3. Apparatus according to claim 2, wherein the first part (15,15';45,45';65,65';85,85';106) of each of said one or more transducers includes the matching element with a substantially plane surface made of ferromagnetic material, and the second part (16,16';56,56';66,66';86,86';107) of each of said one or more transducers includes the core made of ferromagnetic material with windings.

4. Apparatus according to claims 2 and 3, wherein the core is made of MUMETAL®.

5. Apparatus according to any one of claims 2 to 4, wherein at least the substantially plane surface of the matching element is made of MUMETAL.

6. Apparatus according to any one of the preceding claims, wherein said one or more fulcra (9,9';49,49';69,69';89,89';101) include elements defining resiliently deformable portions.

7. Apparatus according to any one of the preceding claims, wherein the power supply and processing electrical circuits are coupled to the second part (16,16';56,56';66,66';86,86';107) of each of said one or more transducers.

8. Apparatus according to one of the preceding claims, for checking dimensions and shape of a mechanical piece with rotational symmetry, including two of said transducers and wherein the mechanical armset (7;47;67;87) includes two of said arms (8,8';48,48';68,68';88,88') and two of said fulcra (9,9';49,49';69,69';89,89').

9. Apparatus according to claim 8, wherein each movable feeler (10,10';50,50';80,80') is connected to the respective arm (8,8';48,48';88,88') at the end opposite to the end carrying the first part (15,15';45,45';85,85') of the respective transducer.

10. Apparatus according to claim 9, wherein the stationary support (17) has a central opening (18) to enable the insertion of the armset (7) and houses the second parts (16,16') of the transducers, the first part (15,15') of each one of said transducers being connected to a portion of the respective arm (8,8') facing the respective second part (16,16') of the same transducer.

11. Apparatus according to claim 10, wherein the stationary support (17) includes a central bearing element (19), the second parts (16,16') of each one of said transducers being connected to said central bearing element (19).

12. Apparatus according to claim 9, wherein the movable support (46) includes a reference element (59) with a V-shaped seat (43) for positioning the mechanical piece and a frame (41) which includes seats (57) at the lateral walls for housing the mechanical armset (47), and the stationary support (54) includes a U-shaped tubular casing with opposite vertical portions to which the second parts (56,56') of each one of the transducers are connected, the stationary support (54) being arranged in the seats (57) of said frame (41) in such a way that the first part (45,45') of each one of the transducers faces the respective second part (56,56').

13. Apparatus according to claim 9, wherein the movable support (92) and the stationary support (93) are cylindrical, the movable support (92) being arranged in a cavity (94) of the stationary support (93), a casing (95) being fixed to the stationary support (93), said movable support (92), stationary support (93) and casing (95) defining a central opening (84) to house the mechanical piece.

14. Apparatus according to claim 13, wherein the movable support (92) and the stationary support (93) include plane antirotation surfaces which mutually cooperate to define the mutual angular arrangement between the movable support (92) and the stationary support (93).

15. Apparatus according to claim 8, wherein one end of each one of said arms (68,68') of the armset (67), which is opposite to the end carrying the first part (65,65') of the respective transducer, is connected to the movable support (61) at the respective fulcrum (69,69'), and the respective feeler (60,60') is positioned at an intermediate point of the arm (68,68'), the movable support (61) is substantially annular shaped and includes a space at the ends of the arms (68,68') carrying the first parts (65,65') of the transducers, the stationary support (71) includes a prop (75) arranged at said space (70) to which the second parts (66,66') of the transducers are connected, the stationary support (71) and the movable support (61) including a cylindrical cavity (64) to house the mechanical piece, and the stationary support (71) being connected to the movable support (61) in such a way that the prop (75) carrying the second parts (66,66') of the transducers is placed between the ends of the arms (68,68') carrying the first parts (65,65') of the transducers.

16. Apparatus according to one of claims 1 to 7, wherein the movable support includes an elongate casing (100) housing the mechanical armset (103) and including two openings at two opposite ends, and the stationary support (108) includes a prop (109) to which the second part (107) of said one or more transducers is connected, each feeler (105) being connected to one portion of the respective arm (102) which partially protrudes from one of said ends of the casing (100) and the stationary support (108) being connected to the movable support (100) at the other end of said casing (100) and being partially inserted in the casing (100) in such a way that the second part (107) of each of said one or more transducers faces the first part (106) of the same transducer connected to the respective arm (102).

## Patentansprüche

1. Vorrichtung zum Überprüfen der Abmessungen und der Form eines mechanischen Bauteils, einschließlich:
- einer stationären Halterung (17; 54; 71; 93; 108),
- einer beweglichen Halterung (6; 46; 61; 92; 100), die abnehmbar mit der stationären Halterung (17; 54; 71; 93; 108) verbunden ist,
- einem mechanischen Armsatz (7; 47; 67; 87; 103), der mit der beweglichen Halterung (6; 46; 61; 92; 100) verbunden ist und einen oder mehrere Arme (8, 8'; 48, 48'; 68 , 68'; 88, 88'; 104) beinhaltet, von denen jeder einen bewegliches Fühler (10, 10'; 50, 50'; 60, 60'; 80, 80'; 105) trägt, der dazu geeignet ist, das mechanische Bauteil zu berühren, und einen oder mehrere Drehpunkte (9, 9'; 49, 49'; 69, 69'; 89, 89'; 101), von denen jeder dazu geeignet ist, Bewegungen eines von einem der Arme (8, 8'; 48, 48'; 68, 68'; 88, 88'; 104) bezüglich der beweglichen Halterung (6; 46; 61; 92; 100) zu ermöglichen,
- einen oder mehrere Positionswandler, von denen jeder einen ersten Teil (15, 15'; 45, 45'; 65, 65'; 85, 85'; 106) und einen zweiten Teil (16, 16'; 56, 56'; 66, 66'; 86, 86'; 107) umfasst, die gegeneinander beweglich sind,
- Stromversorgungs- und Verarbeitungsstromkreise, die mit dem einen oder mehreren Wandlern verbunden sind,
**dadurch gekennzeichnet, dass** der erste Teil und der zweite Teil jedes der Wandler einander zugewandt und in einem gegenseitigen vorbestimmten Abstand angeordnet sind, wobei eine Variation des gegenseitigen Abstandes aufgrund der Berührung zwischen dem Fühler (10, 10'; 50, 50'; 60, 60'; 80, 80'; 105) und dem Bauteil die Erzeugung eines elektrischen Messsignals bewirkt, und
dass der erste Teil (15,15'; 45,45'; 65,65'; 85,85'; 106) und der zweite Teil (16,16'; 56,56'; 66,66'; 86,86 (107) jedes der einen oder mehreren Wandler mit einem Ende eines der genannten Arme(8, 8'; 48, 48'; 68, 68'; 88, 88'; 104) des Armsatzes (7; 47; 67; 87; 103) bzw. der stationären Halterung (17; 54; 71; 93; 108) verbunden sind.

2. Vorrichtung nach Anspruch 1, wobei ein und ein anderer der genannten ersten Teile (15,15'; 45,45'; 65,65; 85, 85'; 106) und der zweiten Teile (16, 16'; 56, 56'; 66, 66'; 86, 86'; 107) jedes der einen oder mehreren Wandler ein Gegenstück mit einer im Wesentlichen ebenen Oberfläche aus ferromagnetischem Material bzw. einen Kern aus ferromagnetischem Material mit Wicklungen beinhalten.

3. Vorrichtung nach Anspruch 2, wobei der erste Teil (15, 15'; 45, 45'; 65, 65'; 85, 85'; 106) von jedem des einen oder der mehrerer Wandler das Gegenstück mit einer im Wesentlichen ebenen Oberfläche aus ferromagnetischem Material beinhaltet, und der zweite Teil (16, 16'; 56, 56'; 66, 66'; 86, 86'; 107) von jedem des einen oder der mehrerer Wandler den Kern aus ferromagnetischem Material mit Wicklungen beinhaltet.

4. Vorrichtung gemäß den Ansprüchen 2 und 3, wobei der Kern aus MUMETAL® besteht.

5. Vorrichtung nach einem der Ansprüche 2 bis 4, wobei zumindest die im Wesentlichen ebene Oberfläche des Gegenstücks aus MUMETAL besteht.

6. Vorrichtung nach einem der vorhergehenden Ansprüche, wobei der eine oder die mehreren Drehpunkte (9, 9'; 49, 49'; 69, 69'; 89, 89'; 101) Elemente umfassen, die elastisch verformbare Abschnitte definieren.

7. Vorrichtung nach einem der vorhergehenden Ansprüche, bei der die elektrischen Stromversorgungs- und Verarbeitungsschaltungen mit dem zweiten Teil (16, 16'; 56, 56'; 66, 66'; 86, 86'; 107) von jedem des einen oder der mehreren Wandler verbunden sind.

8. Vorrichtung nach einem der vorhergehenden Ansprüche zur Überprüfung der Abmessungen und der Form eines drehsymmetrischen mechanischen Bauteils einschließlich zweier der genannten Wandler, wobei der mechanische Armsatz (7; 47; 67; 87) zwei der genannten Arme (8, 8'; 48, 48'; 68, 68'; 88, 88') und zwei der genannten Drehgelenkte (9, 9'; 49, 49'; 69, 69'; 89, 89') beinhaltet.

9. Vorrichtung nach Anspruch 8, wobei jeder bewegliche Fühler (10, 10'; 50, 50'; 80, 80') mit dem jeweiligen Arm (8, 8'; 48, 48'; 88, 88') an dem Ende verbunden ist, das dem Ende gegenüberliegt, das den ersten Teil (15,15'; 45, 45'; 85, 85') des jeweiligen Wandlers trägt.

10. Vorrichtung nach Anspruch 9, wobei die stationäre Halterung (17) eine zentrale Öffnung (18) aufweist, um das Einsetzen des Armsatzes (7) zu ermöglichen, und die zweiten Teile (16, 16') der Wandler aufzunehmen, wobei der erste Teil (15, 15') jedes der Wandler mit einem Abschnitt des jeweiligen Arms (8, 8') verbunden ist, der dem jeweiligen zweiten Teil (16, 16') des gleichen Wandlers gegenüberliegt.

11. Vorrichtung nach Anspruch 10, bei der die stationäre Halterung (17) ein zentrales Lagerelement (19) aufweist, wobei die zweiten Teile (16, 16') jedes der Wandler mit dem zentralen Lagerelement (19) verbunden sind.

12. Vorrichtung nach Anspruch 9, wobei die bewegliche Halterung (46) ein Bezugselement (59) mit einem V-förmigen Sitz (43) zum Positionieren des mechanischen Bauteils und eine Tragstruktur (41) beinhaltet, die Sitze (57) an den Seitenwänden zum Aufnehmen des mechanischen Armsatzes (47) beinhaltet, und die stationäre Halterung (54) ein U-förmiges rohrförmiges Gehäuse mit gegenüberliegenden vertikalen Abschnitten beinhaltet, mit denen die zweiten Teile (56, 56') jedes der Wandler verbunden sind, wobei die stationäre Halterung (54) in den Sitzen (57) der Tragstruktur (41) derart angeordnet ist, dass der erste Teil (45, 45') jedes der Wandler dem jeweiligen zweiten Teil (56, 56') zugewandt ist.

13. Vorrichtung nach Anspruch 9, wobei die bewegliche Halterung (92) und die stationäre Halterung (93) zylindrisch sind, wobei die bewegliche Halterung (92) in einem Hohlraum (94) der stationären Halterung (93) angeordnet ist, wobei ein Gehäuse (95) an der stationären Halterung (93) befestigt ist, wobei die bewegliche Halterung (92), die stationäre Halterung (93) und das Gehäuse (95) eine zentrale Öffnung (84) definieren, um das mechanische Bauteil aufzunehmen.

14. Vorrichtung nach Anspruch 13, wobei die bewegliche Halterung (92) und die stationäre Halterung (93) ebene Antirotationsflächen aufweisen, die zusammenwirken, um die gegenseitige winkelförmige Anordnung zwischen der beweglichen Halterung (92) und der stationären Halterung (93) zu definieren.

15. Vorrichtung nach Anspruch 8, wobei ein Ende von jedem der Arme (68, 68') des Armsatzes (67), das dem Ende entgegengesetzt ist, das den ersten Teil (65, 65') des jeweiligen Wandlers trägt, mit der beweglichen Halterung (61) an dem jeweiligen Drehpunkt (69, 69') verbunden ist, und der jeweilige Fühler (60, 60') an einem Zwischenpunkt des Arms (68, 68') positioniert ist, wobei die bewegliche Halterung (61) im Wesentlichen ringförmig ist und einen Raum an den Enden der Arme (68, 68') enthält, die die ersten Teile (65, 65') der Wandler tragen, wobei die stationäre Halterung (71) eine Stütze (75) aufweist, die in dem Raum (70) angeordnet ist, mit dem die zweiten Teile (66, 66') der Wandler verbunden sind, wobei die stationäre Halterung (71) und die bewegliche Halterung (61) einen zylindrischen Hohlraum (64) zur Aufnahme des mechanischen Bauteils aufweisen und die stationären Halterung (71) derart mit der beweglichen Halterung (61) verbunden ist, dass die Stütze (75), die die zweiten Teile (66, 66') der Wandler trägt, zwischen den Enden der Arme (68, 68') platziert ist, die die ersten Teile (65, 65') der Wandler tragen.

16. Vorrichtung nach einem der Ansprüche 1 bis 7, wobei die bewegliche Halterung ein langgestrecktes Gehäuse (100) aufweist, das den mechanischen Armsatz (103) aufnimmt und zwei Öffnungen an zwei gegenüberliegenden Enden aufweist, und die stationäre Halterung (108) eine Stütze (109) beinhaltet mit der der zweite Teil (107) des einen oder der mehreren Wandler verbunden ist, wobei jeder Fühler (105) mit einem Teil des jeweiligen Arms (102) verbunden ist, der teilweise von einem der Enden des Gehäuses (100) vorsteht, wobei die stationäre Halterung (108) mit der beweglichen Halterung (100) an dem anderen Ende des Gehäuses (100) verbunden ist und teilweise derart in das Gehäuse (100) eingesetzt ist, dass der zweite Teil (107) von jedem des einen oder der mehreren Wandler dem ersten Teil (106) des gleichen Wandlers zugewandt ist, der mit dem jeweiligen Arm (102) verbunden ist.

## Revendications

1. Appareil pour vérifier les dimensions et la forme d'une pièce mécanique comprenant
- un support fixe (17;54;71;93;108),
- un support amovible (6;46;61;92;100) relié au support fixe (17;54;71;93;108) de manière amovible,
- un ensemble de bras mécaniques (7;47;67;87;103), relié au support amovible (6;46;61;92;100) et comprenant un ou plusieurs bras (8,8';48,48';68,68';88,88',104), dont chacun supporte un palpeur amovible (10,10';50,50';60,60';80,80';105) adapté pour toucher la pièce mécanique et un ou plusieurs pivots (9,9';49,49';69,69';89,89';101) dont chacun permet des mouvements d'un desdits bras (8,8';48,48';68,68';88,88';104) par rapport au support amovible (6;46;61;92;100),
- un ou plusieurs transducteurs de position, dont chacun comporte une première partie (15,15';45,45';65,65';85,85';106) et une deuxième partie (16,16';56,56';66,66';86,86';107), mutuellement amovibles,
- des circuits électriques d'alimentation et de traitement couplés à chacun desdits un ou plusieurs transducteurs,
**caractérisée en ce que** lesdites première et deuxième parties de chacun desdits transducteurs se font face et sont disposées à une distance mutuelle prédéfinie, une variation de ladite distance mutuelle due au contact entre le palpeur (10,10';50,50';60,60';80,80';105) et la pièce entraînant l'émission d'un signal de mesure électrique et
**en ce que** la première partie (15,15';45,45';65,65';85,85';106) et la deuxième partie (16,16';56,56';66,66';86,86';107) de chacun desdits un ou plusieurs transducteurs, sont reliées à une extrémité d'un desdits bras (8,8';48,48';68,68';88,88';104) de l'ensemble de bras (7;47;67;87;103) et au support fixe (17;54;71;93;108), respectivement.

2. Appareil selon la revendication 1, dans lequel l'une et l'autre desdites première partie (15,15';45,45';65,65';85,85',106) et deuxième partie (16,16';56,56';66,66';86,86';107) de chacun desdits un ou plusieurs transducteurs comprennent un élément correspondant avec une surface substantiellement plane en matériau ferromagnétique et un noyau en matériau ferromagnétique avec des enroulements, respectivement.

3. Appareil selon la revendication 2, dans lequel la première partie (15,15';45,45';65,65';85,85';106) de chacun desdits un ou plusieurs transducteurs comprend l'élément correspondant avec une surface substantiellement plane en matériau ferromagnétique et la deuxième partie (16,16';56,56';66,66';86,86';107) de chacun desdits un ou plusieurs transducteurs comprend le noyau en matériau ferromagnétique avec des enroulements.

4. Appareil selon les revendications 2 et 3, dans lequel le noyau est en MUMETAL®.

5. Appareil selon l'une quelconque des revendications 2 à 4, dans lequel au moins la surface substantiellement plane de l'élément correspondant est en MUMETAL.

6. Appareil selon l'une quelconque des revendications précédentes, dans lequel ledit ou lesdits pivots (9,9';49,49';69,69';89,89';101) comportent des éléments définissant des parties élastiquement déformables.

7. Appareil selon l'une quelconque des revendications précédentes, dans lequel les circuits électriques d'alimentation et de traitement sont couplés à la deuxième partie (16,16',56,56';66,66';86,86';107) de de chacun desdits un ou plusieurs transducteurs.

8. Appareil selon l'une quelconque des revendications précédentes, pour vérifier les dimensions et la forme d'une pièce mécanique avec symétrie rotationnelle, comprenant deux desdits transducteurs et dans lequel l'ensemble de bras mécaniques (7;47;67;87) comprend deux desdits bras (8,8';48,48';68,68';88,88') et deux desdits pivots (9,9';49,49';69,69';89,89').

9. Appareil selon la revendication 8 dans lequel chaque palpeur amovible (10,10';50,50';80,80') est relié au bras (8,8';48,48';88,88') respectif à l'extrémité opposée à l'extrémité portant la première partie (15,15';45,45';85,85') du transducteur respectif.

10. Appareil selon la revendication 9, dans lequel le support fixe (17) est muni d'une ouverture centrale (18) permettant d'insérer l'ensemble de bras (7) et loge les deuxièmes parties (16,16') des transducteurs, la première partie (15,15') de chacun desdits transducteur étant reliée à une partie du bras (8,8') respectif faisant face à la deuxième partie (16,16') respective du même transducteur.

11. Appareil selon la revendication 10, dans lequel le support fixe (17) comprend un élément porteur central (19), les deuxièmes parties(16,16') de chacun desdits transducteurs étant reliés audit élément porteur central (19).

12. Appareil selon la revendication 9, dans lequel le support amovible (46) comprend un élément de référence (59) avec un siège en forme de V (43) permettant de positionner la pièce mécanique et une armature (41) comprenant des sièges (57) sur les parois latérales permettant de loger l'ensemble de bras mécanique (47) et le support fixe (54) comprend un boîtier tubulaire en forme de U avec des parties verticales opposées auxquelles les deuxièmes parties (56,56') de chacun des transducteurs sont reliées, le support fixe (54) étant disposé dans les sièges (57) de ladite armature (41) de telle sorte que la première partie (45,45') de chacun des transducteurs fasse face à la deuxième partie (56, 56') Respective.

13. Appareil selon la revendication 9, dans lequel le support amovible (92) et le support fixe (93) sont cylindriques, le support amovible (92) étant disposé dans une cavité (94) du support fixe (93), un boîtier (95) étant fixé au support fixe (93), ledit support amovible (92), le support fixe (93) et le boîtier (95) définissant une ouverture centrale (84) permettant de loger la pièce mécanique.

14. Appareil selon la revendication 13, dans lequel le support amovible (92) et le support fixe (93) comprennent des surfaces planes d'anti-rotation qui coopèrent mutuellement pour définir la disposition angulaire mutuelle entre le support amovible (92) et le support fixe (93).

15. Appareil selon la revendication 8, dans lequel une extrémité de chacun desdits bras (68,68') de l'ensemble de bras (67), opposée à l'extrémité portant la première partie (65,65') du transducteur respectif, est reliée au support amovible (61) au niveau du pivot (69,69') respectif, et le palpeur (60,60') respectif est positionné à un point intermédiaire du bras (68,68'), le support amovible (61) a une forme substantiellement annulaire et comprend un espace aux extrémités des bras (68,68') portant les premières parties (65,65') des transducteurs, le support fixe (71) comprend un soutien (75) disposé audit espace (70), auquel les deuxièmes parties (66,66') des transducteurs sont reliées, le support fixe (71) et le support amovible (61) comprenant une cavité cylindrique (64) permettant de loger la pièce mécanique et le support fixe (71) étant relié au support amovible (61) de telle sorte que le soutien (75) portant les deuxièmes parties (66,66') des transducteurs soit placé entre les extrémités des bras (68,68') portant les premières parties (65,65') des transducteurs.

16. Appareil selon l'une quelconque des revendications 1 à 7, dans lequel le support amovible comprend un boîtier allongé (100) logeant l'ensemble de bras mécanique (103) et comprenant deux ouvertures à deux extrémités opposées et le support amovible (108) comprend un soutien (109) auquel la deuxième partie (107) desdits un ou plusieurs transducteurs est reliée, chaque palpeur (105) étant relié à une partie du bras (102) respectif dépassant partiellement de l'une desdites extrémités du boîtier (100) et le support fixe (108) étant relié au support amovible (100) à l'autre extrémité dudit boîtier (100) et étant partiellement inséré dans le boîtier (100) de telle sorte que la deuxième partie (107) de chacun desdits un ou plusieurs transducteurs fasse face à la première partie (106) du même transducteur relié au bras (102) respectif.
